# EUROPÄISCHE PATENTSCHRIFT

(11) **EP 1 173 036 B1**
(45) Veröffentlichungstag und Bekanntmachung des Hinweises auf die Patenterteilung: **01.05.2013**
(21) Anmeldenummer: 01111820.5
(22) Anmeldetag: 16.05.2001
(51) Int. Cl.: H04W 4/04, B60R 25/00

(54) **Kommunikationssystem zum Abwickeln von Spezialapplikationen in Kraftfahrzeugen**
Communicating system for processing vehicle specific applications
Système de communication pour traiter des applications spécifiques aux véhicules

(30) Priorität: 12.07.2000 DE 10033808
(43) Veröffentlichungstag der Anmeldung: 16.01.2002
(73) Patentinhaber: Deutsche Telekom AG, 53113 Bonn (DE)
(72) Erfinder: Müller, Dietmar, 53227 Bonn (DE); Rudolph, Axel, 50169 Kerpen (DE)
(74) Vertreter: Deuschel, Wilhelm

(56) Entgegenhaltungen:
- EP-A- 0 846 822
- EP-A- 0 891 111
- DE-A- 4 318 596
- DE-A- 19 816 575
- PATENT ABSTRACTS OF JAPAN vol. 018, no. 205 (E-1536), 12. April 1994 (1994-04-12) & JP 06 006852 A (FUJITSU TEN LTD), 14. Januar 1994 (1994-01-14)

## Beschreibung

Die Erfindung betrifft ein Kommunikationssystem zum Abwickeln von Spezialapplikationen in Kraftfahrzeugen nach dem Oberbegriff des Anspruchs 1.

Spezialapplikationen aus dem Bereich der Verkehrstelematik bauen auf einem Austausch von Informationen zwischen einem Fahrzeug und der Außenwelt und damit auf der Mobilkommunikation über ein Mobilfunknetz unter Nutzung von Sprache und SMS (Short-Message-System) als Basistechnologie auf.

Die Spezialapplikationen aus der Verkehrstelematik umfassen fahrzeugbezogene Basisapplikationen, welche zum Serienumfang des Fahrzeugs gehören und nutzerbezogene Applikationen in Form von Diensten über deren Inanspruchnahme der Eigentümer des Fahrzeugs selbst entscheidet und bereit ist, dafür zu bezahlen.

Die fahrzeugbezogenen Basisapplikationen umfassen beispielsweise automatischer oder manueller Notruf, Fahrzeugortung bzw. Verfolgung des Fahrzeugs (Fahrzeug-Tracking) für Diebstahlschutz, Überfallschutz oder Flottenmanagement, Remote Control/Access zur Manipulation des Fahrzeugs über eine Zentrale beispielsweise zur Fahrzeugstillegung bei unbefugter Nutzung, Ferndiagnose und Aufnahme und Weitergabe von Floating-Car-Data (FCD).

Die nutzerbezogenen Applikationen umfassen beispielsweise eine dynamische Zielführung mit Berücksichtigung von aktuellen Verkehrsinformationen in der Ausführung als On-Board-Navigationsysstem oder als Off-Bord-Navigationsystem, Informations- und Auskunftsdienste und andere Serviceleistungen zu welchen der Eigentümer/Fahrer des Fahrzeugs einen Zugang wünscht.

Die DE 198 16 575 A1 beschreibt ein Kommunikationssystem zum Abwickeln von Spezialapplikationen in Kraftfahrzeugen, wobei der Zugang zu den Spezialapplikationen vollständig oder teilweise als Programm in einer Mobilfunk-Teilnehmer-Identifizierungs-Karte (SIM-Karte) abläuft, und teilweise oder vollständig auf der SIM-Karte gespeichert ist, wobei nicht zwischen fahrzeugbezogenen Basisapplikationen und nutzerbezogenen Applikationen unterschieden wird und wobei die SIM-Karte einer Person fest zugeordnet ist.

Aufgabe der Erfindung ist es, ein Verfahren zum Abwickeln von Spezialapplikationen anzugeben, bei welchen der Zugang zu fahrzeugbezogenen Basisapplikationen davon unabhängig ist, ob der Benutzer des Fahrzeugs eigene Diensteverträge für Spezialapplikationen abgeschlossen hat.

Diese Aufgabe wird erfindungsgemäß durch die Merkmale des Anspruchs 1 gelöst. Die Unteransprüche betreffen vorteilhafte Aus- und Weiterbildungen der Erfindung.

Der Hauptgedanke der Erfindung besteht darin, daß eine Mobilfunk-Teilnehmer-Identifizierungskarte (SIM-Karte), welche durch eine Kartennummer und eine Rufnummer eindeutig identifizierbar ist, einem Endgerät mit einer bestimmten Gerätenummer und einem Kraftfahrzeug mit einer bestimmten Fahrgestellnummer fest zugeordnet wird. Dadurch steht die Mobilfunk-Teilnehmer-Identifizierungskarte (SIM-Karte) ausschließlich in Bezug zu einem Endgerät, in dem sie fest verbaut ist und zu einem bestimmten Fahrzeug, in welches das Endgerät integriert ist.

Ein Kundenverhältnis besteht somit zwischen einem Mobilfunknetzbetreiber und einem Fahrzeughersteller. Außerdem kommt als weitere Partei im Kundenverhältnis anstelle des Fahrzeugherstellers oder zusätzlich zum Fahrzeughersteller auch ein Telematikdienstleister in Betracht. Dadurch wird im Fahrzeug die Grundlage für eine kommunikationsfähige Plattform geschaffen mit welcher fahrzeugbezogene Basisapplikationen, welche zur Serienausstattung des Fahrzeugs gehören, abgewickelt werden können. Der Käufer erwirbt das Fahrzeug mit einer Kommunikationseinheit, bei welcher der Zugang und die Funktionalität der Basisapplikationen nicht davon abhängig ist, daß der Käufer über den Erwerb des Fahrzeuges hinaus mehrere Dienstverträge unterschreibt und anschließend monatliche Gebühren zahlt. Für die Durchführung der Spezialapplikationen ist die Kommunikationseinheit so ausgelegt, daß alle Möglichkeiten der Mobilkommunikation wie Sprache, SMS, Paging, GPRS, Fax, E-Mail, Datenübertragung usw. verwendbar sind.

Bei einer vorteilhaften Ausgestaltung der Erfindung kann mit der verwendeten Mobilfunk-Teilnehmer-Identifizierungskarte (SIM-Karte) keine uneingeschränkte Mobilkommunikation durchgeführt werden. Vielmehr ist die Funktion der Mobilfunk-Teilnehmer-Identifizierungskarte (SIM-Karte) auf die Erfordernisse der abzuwickelnden Spezialapplikationen eingeschränkt. Diese Einschränkung wird über eine Festlegung der ausschließlich zulässigen Rufnummern zu denen eine Verbindung hergestellt werden kann realisiert.

Die Kontrolle und Überwachung dieser Einschränkung wird durch den Netzbetreiber durchgeführt. Zu diesem Zweck überprüft der Netzbetreiber vor dem Verbindungsaufbau welche Rufnummern die Mobilfunk-Teilnehmer-Identifizierungskarte (SIM-Karte) anrufen darf und von welchen Rufnummern die Mobilfunk-Teilnehmer-Identifizierungskarte (SIM-Karte) angerufen werden darf. Liegt ein unerlaubter Verbindungswunsch vor, so wird die Verbindung vom Netzbetreiber nicht hergestellt. Dies kann durch entsprechende Ausgabemittel dem Benutzer angezeigt werden. Beim Netzbetreiber erfolgt auch die Prüfung, ob ein Mißbrauch, beispielsweise durch einen Ausbau der Mobilfunk-Teilnehmer-Identifizierungskarte (SIM-Karte) vorliegt. Bei dieser Prüfung wird kontrolliert, ob die Nummer der im Netz kommunizierenden Mobilfunk-Teilnehmer-Identifizierungskarte (SIM-Karte) mit der dieser Karte zugeordneten Endgerätenummer bzw. Fahrgestellnummer zusammen paßt. Diese Prüfung wird beispielsweise einmal pro Tag durchgeführt.

Zudem werden in Abhängigkeit von der jeweiligen Spezialapplikation die für die Telekommunikation anfallenden Gebühren von demjenigen übernommen, der mit der Spezialapplikation ein wirtschaftliches Interesse verbindet. So werden beispielsweise die Gebühren im Falle der Ferndiagnose dem Automobilhersteller in Rechnung gestellt. Die Telekommunikationskosten für eine Diensteerbringung werden dem Telematikdienstleister in Rechnung gestellt. Die Telekommunikationskosten zum Aufnehmen von Floating-Car-Data (FCD) werden dem Verarbeiter dieser Daten, der diese zur Generierung von Verkehrsinformationen weiter vertreibt in Rechnung gestellt.

Die Vergebührung dieser Telekommunikationsverbindungen erfolgt in vorteilhafter Weise über eine direkte Zuordnung durch den Netzbetreiber an Dritte, die von vornherein in Abhängigkeit zu den Ziel- bzw. Quellrufnummern festgelegt werden. Zu diesem Zweck unterhält der Netzbetreiber eine Datenbank aus der die Zuordnung von Endgerät bzw. Kraftfahrzeug zu einem Fahrzeughersteller und/oder Telematikdienstleister und/oder FCD-Verarbeiter hervorgeht.

Als Alternative ist denkbar, daß der Telematikdienstleister vom Netzbetreiber die Rechnungsinformationen in Datenformat erhält und seinerseits in einer Datenbank durch Zuordnung vorgenommen nach Fahrzeug und Dienst umverteilt.

Um die Funktion der Basisapplikationen auch im Ausland zu gewährleisten, ist die Mobilfunk-Teilnehmer-Identifizierungskarte (SIM-Karte) bei einer weiteren Ausführungsform uneingeschränkt roamingfähig ausgebildet.

Ein besonderer Vorteil der Erfindung besteht darin, daß als Mobilfunk-Teilnehmer-Identifizierungskarte (SIM-Karte) eine handelsübliche SIM-Karte verwendet wird und die eigentlichen Kontrollfunktionen durch den Netzbetreiber durchgeführt werden. Durch die beschriebenen Maßnahmen wird dann sichergestellt, daß die SIM-Karte nicht mißbräuchlich verwendet werden kann.

Es ergibt sich somit nachfolgender Verfahrensablauf beim Abwikkeln von Spezialapplikationen in einem Kraftfahrzeug.

Die Mobilfunk-Teilnehmer-Identifizierungskarte (SIM-Karte) wird mit den im Mobilfunknetz hinterlegten Einschränkungen mit deaktivierter PIN-Funktion an den Automobilhersteller angeliefert. Dort wird sie in das Endgerät eingebaut und über die Mitteilung der Zuordnung der Kartennummer bzw. der Rufnummer der Mobilfunk-Teilnehmer-Identifizierungskarte (SIM-Karte) zu der Endgerätenummer bzw. Fahrgestellnummer an den Netzbetreiber mit dem Endgerät "verheiratet". Die Mitteilung an den Netzbetreiber erfolgt beispielsweise über Batch-Listen, wobei die Integration der Mobilfunk-Teilnehmer-Identifizierungskarte (SIM-Karte) in das Gerät vom Fahrzeughersteller möglicherweise an den Endgerätelieferanten oder einen Dritten übergeben wird. Anschließend wird das komplette System fest in das Fahrzeug verbaut.

Jegliche Kommunikation, die über die Mobilfunk-Teilnehmer-Identifizierungskarte (SIM-Karte) abgewickelt wird, unterliegt ab Auslieferung der Karte der Überwachung durch den Netzbetreiber.

Sobald das Fahrzeug an den Kunden ausgeliefert wird, erhält der Telematikdienstleister vom Fahrzeughersteller eine Mitteilung über das genaue Auslieferungsdatum da die Laufzeit (3-5 Jahre) erst dann beginnen sollte, wenn der Fahrzeughersteller die Auslieferung des Fahrzeuges an den Kunden anzeigt.

Nach Beendigung der Laufzeit soll eine weitere Laufzeit für jeweils ein Jahr gegen ein festgelegtes Entgelt möglich sein. Kommt keine Verlängerung zustande, wird die Mobilfunk-Teilnehmer-Identifizierungskarte (SIM-Karte) deaktiviert.

Der Ablauf der Laufzeit der Mobilfunk-Teilnehmer-Identifizierungskarte (SIM-Karte) wird sinnvoller Weise mit dem Ablauf des Dienstes zusammenfallen. Der Telematikdienstleister wird sich zu gegebener Zeit um eine Fortsetzung des Diensteverhältnisses um mindestens ein Jahr mit dem jeweiligen Fahrzeugeigentümer bemühen und in diesem Zusammenhang auch die Interessen des Netzbetreibers wahrnehmen. Für die weitere Aktivierung der Mobilfunk-Teilnehmer-Identifizierungskarte (SIM-Karte) wird ein festgelegter Betrag an den Netzbetreiber abgeführt werden.

Eine endgültige Deaktivierung der Mobilfunk-Teilnehmer-Identifizierungskarte (SIM-Karte) sollte möglichst nicht sofort erfolgen, um eine Reaktivierung durch einen späteren Eigentümer zuzulassen. Jedoch muß die Mobilfunk-Teilnehmer-Identifizierungskarte (SIM-Karte) bei Ablauf der Laufzeit gesperrt werden, wobei dies dem Fahrer im Fahrzeug durch geeignete Weise durch optische oder akustische Ausgabemittel angezeigt wird.

Ein Ausführungsbeispiel der Erfindung wird nachfolgend unter Bezugnahme auf die Zeichnung näher erläutert. Es zeigen:
- Fig. 1: Eine schematische Darstellung eines Koordinationsschaubild
- Fig. 2: in schematischer Darstellung ein Ablaufdiagramm für die Abwicklung von Spezialapplikationen in einem Kraftfahrzeug

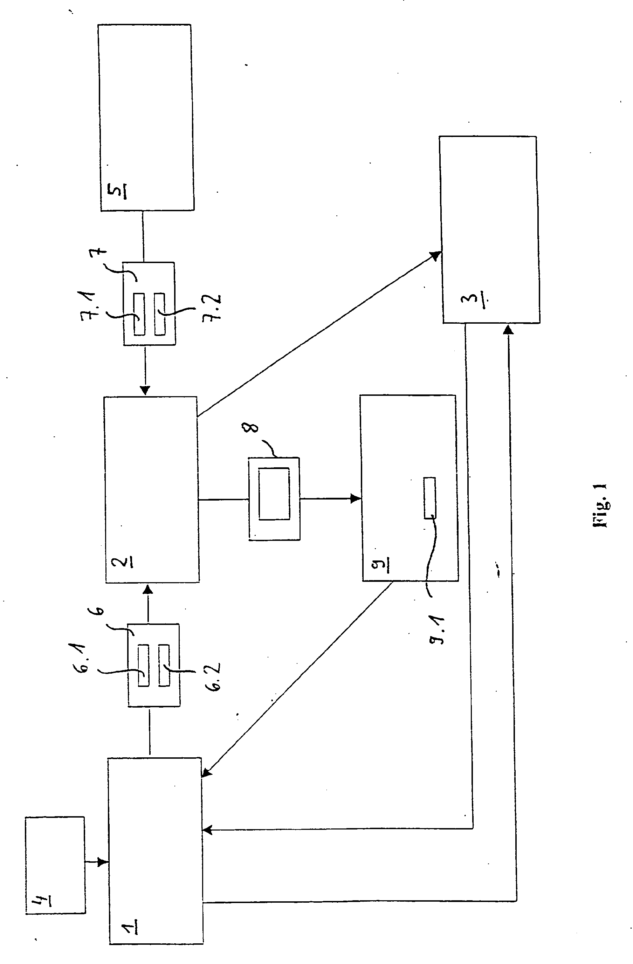

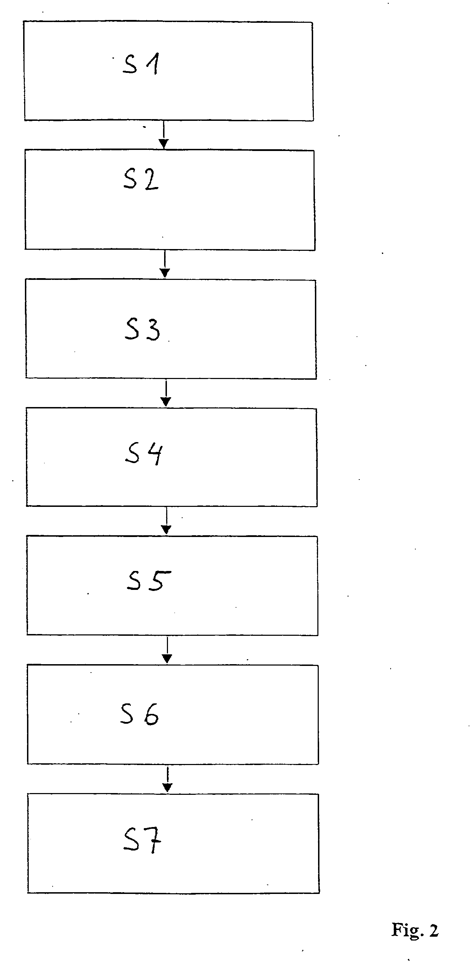

Fig. 1 zeigt in Verbindung mit Fig. 2 ein Kommunikationssystem zum Abwickeln von Spezialapplikationen in einem Kraftfahrzeug. Wie aus der Fig. 1 ersichtlich ist müssen für eine reibungslose Abwicklung von Spezialapplikationen im Kraftfahrzeug Abläufe bei Mobilfunknetzbetreiber 1, Fahrzeugherstellern 2 und Telematikdienstleistern 3 unter Einbeziehung von Herstellern von Mobilfunk-Teilnehmer-Identifizierungs-Karten (SIM-Karten) 4 und Endgeräteherstellern 5 koordiniert werden.

In einem ersten Schritt S1 liefert der Hersteller von Mobilfunk-Teilnehmer-Identifizierungs-Karten (SIM-Karten) 4 Mobilfunk-Teilnehmer-Identifizierungs-Karten (SIM-Karten) 6 an einen Mobilfunknetzbetreiber 1, wobei die Mobilfunk-Teilnehmer-Identifizierungs-Karten (SIM-Karten) 6 hinsichtlich des Prozessors und der Codierung keinerlei besondere Merkmale im Vergleich mit einer normalen SIM-Karte aufweisen. Jede einzelne Mobilfunk-Teilnehmer-Identifizierungskarte (SIM-Karte) 6 verfügt über eine Kartennummer 6.1, welcher eine Rufnummer 6.2 fest zugeordnet ist. Zudem sind die SIM-Karten 6 personalisiert und verfügen über eine PIN (Personal-Identification-Number), wobei die PIN deaktiviert ist. Dem mit der deaktivierten PIN einhergehende Risiko wird dadurch begegnet, daß die SIM-Karte zunächst im Mobilfunknetz gesperrt ist.

In einem zweiten Schritt S2 liefert der Mobilfunknetzbetreiber 1 die SIM-Karten 6 an einen Fahrzeughersteller 2. Gleichzeitig teilt der Mobilfunknetzbetreiber einem Telematikdienstleister 3, beispielsweise durch Übermittlung von Batch-Listen mit, welche SIM-Karten 6 (Kartennummer 6.1 und Rufnummer 6.2) an welchen Fahrzeughersteller 2 geliefert wurden.

Die Zuordnung der SIM-Karten 6 über ihre individuellen Nummern 6.1, 6.2 zu einem bestimmten Fahrzeughersteller 2 ist im weiteren Prozeß Grundlage verschiedener Plausibilitätsprüfungen.

Der Endgerätehersteller 5 liefert an den Fahrzeughersteller 2 Telematikendgeräte 7 mit integriertem GSM-Modul 7.1, welches über eine Gerätenummer 7.2 verfügt. In einem dritten Schritt S3 integriert der Fahrzeughersteller 2 die SIM-Karte 6 in ein bestimmtes Endgerät 7, wodurch eine Zuordnung von den individuellen Kartennummern 6.1, 6.2 der SIM-Karte 6 zu einem bestimmten Endgerät 7 mit einer individuellen Endgerätenummer 7.2 erfolgt. Die PIN/PUK Anlage der SIM-Karte 6 wird vernichtet, da sie im weiteren Prozeß nicht benötigt wird. Zusätzlich wird im dritten Schritt S3 die durch SIM-Karte 6 und Endgerät 7 gebildete Einheit 8 in ein bestimmtes Kraftfahrzeug 9 verbaut, wobei über die Fahrgestellnummer 9.1 des Kraftfahrzeugs 9, die Endgerätenummer 7.2 und die individuellen Kartennummern 6.1, 6.2 eine feste Zuordnung der bestimmten Endgerät/Sim-Karten-Einheit 8 zu diesem Fahrzeug 9 erfolgt. Damit ist die Grundlage für eine kommunikationsfähige Plattform in dem Kraftfahrzeug 9 geschaffen.

In einem vierten Schritt S4 teilt der Fahrzeughersteller 2 dem Telematikdienstleister 3 mit, welche SIM-Karte 6 welchem Endgerät 7 und somit welchem Fahrzeug 9 zugeordnet ist.

Die Zuordnung ist im weiteren Prozeß ebenfalls Grundlage von verschiedenen Plausibilitätsprüfungen.

In einem fünften Schritt S5 vergleicht der Telematikdienstleister 3 die Informationen, die er vom Mobilfunknetzbetreiber 1 erhalten hat - welche spezifische SIM-Karten 6 welchem Fahrzeughersteller 2 zugeordnet wurden - mit den Informationen, die er vom Fahrzeughersteller 2 - welche spezifische SIM-Karten 6 welchem spezifischen Fahrzeug 9 und damit einem bestimmten Fahrzeughersteller 2 zugeordnet wurde. Durch die Übernahme dieser Informationen in eine Datenbank kann zu diesem Zeitpunkt eine erste Plausibilitätsprüfung erfolgen, mit dem geprüft wird, ob die vom Fahrzeughersteller 2 als verbaut mitgeteilte SIM-Karte 6 zuvor tatsächlich auf der vom Mobilfunknetzbetreiber 1 mitgeteilten Lieferliste diesem Fahrzeughersteller 2 zugeordnet wurde.

Fällt die Plausibilitätsprüfung negativ aus, das heißt, kann die SIM-Karte 6 nicht erkannt werden, schließt sich ein Prozeß an, der zunächst eine Überprüfung beim Mobilfunknetzbetreiber 1 und dann beim Fahrzeughersteller 2 beinhaltet. Kann keine Ursache identifiziert werden, so wird die SIM-Karte 6 durch den Mobilfunknetzbetreiber deaktiviert.

Nach der Übermittlung der fest zugeordneten SIM-Karten/Fahrzeugeinheiten vom Fahrzeughersteller 3 teilt der Telematikdienstleister 3 dem Mobilfunknetzbetreiber 1 in einem sechsten Schritt S6 mit, beispielsweise anhand von Batch-Listen, welche virtuellen und physikalischen Rufnummern (als zulässige Quell- und Zielrufnummern) jeder spezifischen SIM-Karte 6 zugeordnet sind. Erst wenn eine SIM-Karte 6 auf einer dieser Listen erscheint, wird sie im Mobilfunknetz durch den Mobilfunknetzbetreiber 1 freigeschaltet.

In einem siebten Schritt S7 teilt der Fahrzeughersteller 2 dem Mobilfunknetzbetreiber 1 durch Inbetriebnahme der SIM-Karte 6 mit, welche SIM-Karte 6 welchem Endgerät 7 und welchem Fahrzeug 9 zugeordnet ist. Sollte das Auswechseln der SIM-Karte 6 notwendig werden, so wird durch den Fahrzeughersteller 2 einfach die Zuordnung der SIM-Karte 6 zu einem bestimmten Endgerät/Fahrzeug geändert.

Die beschriebene Zuordnung bildet die Grundlage der Überprüfung der bestimmungsgemäßen Verwendung der SIM-Karte 6 durch den Mobilfunknetzbetreiber, beispielsweise anläßlich des Location-Updates.

Um die reibungslose Abwicklung von Spezialapplikationen sicherzustellen, legt der Mobilfunknetzbetreiber 1 in einer Datenbank die Zuordnung der bestimmten SIM-Karte 6 zu einem bestimmten Fahrzeughersteller 2 und die Zuordnung einer bestimmten SIM-Karte 6 zu einem bestimmten Endgerät/Fahrzeug ab.

Zudem kontrolliert der Mobilfunknetzbetreiber 1 beim Verbindungsaufbau anhand der vom Telematikdienstleister 3 mitgeteilten zulässigen Rufnummern die Zulässigkeit von Quell- und Zielrufnummern für die Kommunikationsverbindungen.

Der Telematikdienstleister 3 betreibt eine Abrechnungsdatenbank in der die Zuordnung von einer bestimmten SIM-Karte/Endgerät 8 zu einem bestimmten Fahrzeughersteller 2 über die Rufnummer festgehalten ist.

Anhand dieser Datenbank und der Übermittlung von elektronischen Abrechnungsdaten durch den Mobilfunknetzbetreiber 1 erfolgt die Umverteilung von Verbindungsgebühren und die Zuordnung an den Fahrzeughersteller 2, den Telematikdienstleister 3 oder an den FCD-Verarbeiter.

Anhand einer Dienstedatenbank erfolgt die Administration und Abwicklung der Dienste. Dort sind unter anderem Zusatzinformationen über das Fahrzeug und seinen Halter gespeichert.

Der Fahrzeughersteller 2 überprüft die SIM-Karten-Funktionalität beispielsweise über (Voice-)Server am Ende des Produktionsprozesses.

Den genauen Zeitpunkt der Auslieferung des Fahrzeuges teilt der Fahrzeughersteller 2 dem Telematikdienstleister 3 als Beginn der Vertragslaufzeit für die SIM-Karte 6 und die Spezialapplikationen mit.

Der Einbau der SIM-Karte 6 kann bei einem alternativen Ablauf auch beim Endgerätehersteller 5 oder bei einem vom Fahrzeughersteller 3 beauftragten Dritten erfolgen. Sicherheitslücken in einem solchen Prozeß müssen dann vom Fahrzeughersteller 3 getrennt bewertet und geschlossen werden. Hier wird der Einfachheit halber unterstellt, daß der Fahrzeughersteller 3 selbst die Integration aller Komponenten vornimmt.

## Patentansprüche

1. Kommunikationssystem zum Abwickeln von Spezialapplikationen in Kraftfahrzeugen (9) über ein Mobilfunknetz mittels einer Mobilfunk-Teilnehmer-Identifizierungs-Karte (6), welche in ein Endgerät (7) im Kraftfahrzeug (9) integriert ist, wobei die Mobilfunk-Teilnehmer-Identifizierungs-Karte (6) über eine Kartennummer (6.1) und/oder eine Rufnummer (6.2) eindeutig identifizierbar ist und wobei der Zugang zum Mobilfunknetz durch die Mobilfunk-Teilnehmer-Identifizierungs-Karte (6) sichergestellt ist,
**dadurch gekennzeichnet,**
**daß** die Mobilfunk-Teilnehmer-Identifizierungs-Karte (6) über die Kartennummer (6.1) und/oder die Rufnummer (6.2) dem Endgerät (7) über dessen Gerätenummer (7.2) und dem Kraftfahrzeug (9) über dessen Fahrgestellnummer (9.1) fest zugeordnet ist.

2. Kommunikationssystem nach Anspruch 1,
**dadurch gekennzeichnet,**
**daß** Zuordnung der Mobilfunk-Teilnehmer-Identifizierungs-Karte (6) zu einem Endgerät (7) und einem Kraftfahrzeug (9) in einer Datenbank abgespeichert ist, wobei die Datenbank beim Mobilfunknetzbetreiber (1) und/oder bei einem Telematikdienstleister (3) und/oder bei einem Fahrzeughersteller (2) geführt wird.

3. Kommunikationssystem nach Anspruch 1 oder 2,
**dadurch gekennzeichnet,**
**daß** im Mobilfunknetz für die fest zugeordnete Mobilfunk-Teilnehmer-Identifizierungs-Karte (6) nur Verbindungen zu vorgegebenen Rufnummern herstellbar sind.

4. Kommunikationssystem nach Anspruch 3,
**dadurch gekennzeichnet,**
**daß** der Mobilfunknetzbetreiber (1) die Zulässigkeit von Quell- und Zielrufnummern für Kommunikationsverbindungen beim Verbindungsaufbau kontrolliert.

5. Kommunikationssystem nach einem der vorherigen Ansprüche,
**dadurch gekennzeichnet,**
**daß** Verbindungsgebühren anhand einer Abrechnungsdatenbank auf den Fahrzeughersteller (2) und/oder den Telematik-dienstleister (3) und/oder einen FCD (Eloating-Car-Data) - Verarbeiter umverteilt werden, wobei die Abrechnungsdatenbank eine Zuordnung von der Mobilfunk-Teilnehmer-Identifizierungs-Karte (6) zu dem Fahrzeughersteller (2) und/oder dem Telematikdienstleister (3) und/oder dem FCD-Verarbeiter umfaßt.

## Claims

1. A communications system for handling special applications in motor vehicles (9) via a mobile radio network by means of a mobile radio subscriber identity card (6) that is integrated into a terminal (7) in the motor vehicle (9), wherein the mobile radio subscriber identity card (6) can be unambiguously identified via a card number (6.1) and/or a subscriber number (6.2) and wherein the access to the mobile radio network is ensured by the mobile radio subscriber identity card (6),
**characterized in that** the mobile radio subscriber identity card (6) is permanently assigned, via the card number (6.1) and/or the subscriber number (6.2), to the terminal (7) via its device number (7.2), and to the motor vehicle (9) via its vehicle identification number (9.1).

2. The communications system according to claim 1,
**characterized in that** the assignment of the mobile radio subscriber identity card (6) to a terminal (7) and a motor vehicle (9) is stored in a database, wherein the database is maintained at the mobile radio network provider (1) and/or at a telematics provider (3) and/or at a vehicle manufacturer (2).

3. The communications system according to claim 1 or 2,
**characterized in that**, for the permanently assigned mobile radio subscriber identity card (6), only connections to predetermined subscriber numbers can be set up in the mobile radio network.

4. The communications system according to claim 3,
**characterized in that** the mobile radio network provider (1) checks the admissibility of source and target subscriber numbers for communication links during the setup of the connection.

5. The communication system according to any one of the preceding claims,
**characterized in that** connection fees are redistributed to the vehicle manufacturer (2) and/or the telematics provider (3) and or a floating car data (FCD) processor according to a billing database, wherein the billing database comprises an assignment of the mobile radio subscriber identity card (6) to the vehicle manufacturer (2) and/or the telematics provider (3) and/or the FCD processor.

## Revendications

1. Système de communication pour opérer des applications spéciales dans des véhicules automobiles (9) via un réseau de radiocommunication mobile au moyen d'une carte d'identification d'abonné de réseau de radiocommunication mobile (6) intégrée à un terminal (7) embarqué dans le véhicule automobile (9), la carte d'identification d'abonné de réseau de radiocommunication mobile (6) étant clairement identifiable par l'intermédiaire d' un numéro de carte (6.1) et/ou d'un numéro d'appel (6.2), et l'accès au réseau de radiocommunication mobile étant assuré par la carte d'identification d'abonné de réseau de radiocommunication mobile (6),
**caractérisé en ce que** la carte d'identification d'abonne de réseau de radiocommunication mobile (6) est affectée de manière fixe, par l'intermédiaire du numéro de carte (6.1) et/ou du numéro d'appel (6.2), au terminal (7) par le numéro de série de ce dernier (7.2) et au véhicule automobile (9) par le numéro de châssis de celui-ci (9.1).

2. Système de communication selon la revendication 1,
**caractérisé en ce que** l'affectation d'une carte d'identification d'abonné de réseau de radiocommunication mobile (6) à un terminal (7) et à un véhicule automobile (9) est enregistrée dans une base de données, celle-ci étant gérée par l'opérateur de réseau mobile (1) et/ou par un prestataire de services télématiques (3) et/ou par un constructeur automobile (2).

3. Système de communication selon l'une des revendications 1 ou 2,
**caractérisé en ce que**, pour la carte d'identification d'abonné de réseau de radiocommunication mobile (6) affectée de manière fixe, seules des connexions vers des numéros prédéfinis peuvent être établies dans le réseau de radiocommunication mobile.

4. Système de communication selon la revendication 3,
**caractérisé en ce que** l'opérateur de réseau de radiocommunication mobile (1) vérifie la validité des numéros appelants et appelés pour les connexions au moment de l'établissement des communications:

5. Système de communication selon l'une des revendications précédentes,
**caractérisé en ce que** les taxes de communication sont redistribuées entre le constructeur automobile (2) et/ou le prestataire de services télématiques (3) et/ou un processeur FCD (Floating Car Data), la base de données de facturation comprenant une affectation de la carte d'identification d'abonné de réseau de radiocommunication mobile (6) au constructeur automobile (2) et/ou au prestataire de services télématiques (3) et/ou au processeur FCD.
